# EUROPEAN PATENT SPECIFICATION

(11) **EP 0 488 051 B1**
(45) Date of publication and mention of the grant of the patent: **24.05.1995**
(21) Application number: 91119855.4
(22) Date of filing: 21.11.1991
(51) Int. Cl.: B65B 13/02

(54) **Apparatus for and method of binding electric cables**
Vorrichtung und Verfahren zum Binden von elektrischen Kabeln
Appareil et méthode de cerclage de câbles électriques

(30) Priority: 27.11.1990 JP 124767/90 U
(43) Date of publication of application: 03.06.1992
(73) Proprietor: NIREI INDUSTRY CO. LTD., Mitaka-shi Tokyo 181 (JP)
(72) Inventor: Nirei, Shigenobu, 7-chome, Mitaka-shi, Tokyo 181 (JP)
(74) Representative: Sperling, Rüdiger, Dipl.-Ing.

(56) References cited:
- EP-A- 0 297 337
- EP-A- 0 303 723
- FR-A- 2 223 141

## Description

### BACKGROUND OF THE INVENTION

### Field of the Invention

The present invention relates to an apparatus for binding electric cables etc. as defined in the preamble of claim 1 and a method for the use of such an apparatus as defined in claim 3.

### Description of the Prior Art

The applicant of the present invention has proposed an apparatus for binding electric cables etc. of this sort, having a structure as shown in the specification filed by the Japanese Laid-Open Utility Model Publication No. 62-65954. In this specification, one end of a binding band is first inserted into an opening portion of a stopper and then wound round an object to be bound like electric cables etc. in a loop fashion and again inserted into the opening portion of the stopper in the reverse direction to engage a convex-like gear of the binding band with a pawl member positioned on the one side of the stopper. Thereafter, the root side of the binding band is tightened and secondly the convex-like gears thereof are engaged with the pawl member positioned on the other side of the stopper to bind the electric cables etc. A useless portion of the binding band protruding from the stopper is cut out. In the following step of binding, a setting portion can be employed as a top end together with another stopper. Accordingly, a series of binding band can be employed non-wastefully effectively and furthermore the firm binding is available.

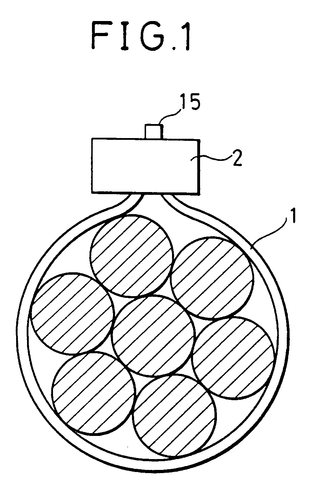

However, in the above-mentioned binding apparatus as shown in Fig. 1, when the useless portion of a binding band 1 protruding from the stopper is cut out, the thus-cut end face projects from an opening end of the stopper 2 and moreover an angle portion of a projecting end 15 of the binding band 1 is formed into an acute shape since the cutting is performed by means of a sharp-edged tool of a cutter. Accordingly, after cords to be used inside automobiles, office machines or the like are bound by the above-mentioned binding apparatus to be positioned inside, when operators reach into the automobiles, office machines or the like on the job of maintenance operations etc., the operators may hook their hands at the projecting end 15 of the binding band protruding from the stopper to be wounded. This is, of course, dangerous, but without being confined to this, the operators' bleeding stains finished components (for instance, seats of automobiles) and the stain was one of causes reducing merchandise value.

### SUMMARY OF THE INVENTION

The present invention is made to solve the above-mentioned conventional drawbacks. It is an object of the present invention to provide an apparatus for and method of binding electric cables etc. which in particular holds a body harmless and does not stain merchandise or the like.

In order to achieve the above-mentioned objects, the apparatus for binding electric cables etc. according to the present invention further comprises a pair of parallel ribs protruding from opposite sides of an opening end of the opening portion of said stopper which is at the free end of the pawl members and a space being formed so that a cutter for cutting a protruding portion of said binding band passes through between said ribs arranged on both sides of the opening end.

With the above-mentioned arrangement, the top end of the binding band is penetrated into the opening portion of the stopper and drawn out to wind the binding band round the object to be bound like electric cables etc. in a loop fashion. Then, the above-mentioned one end is again inserted into the opening portion of the stopper in the reverse direction to pass the binding band through the opening portion in a state with the respective back faces being overlapped, so that the convex-like gears may be engaged with pawl portions of one pawl member of the stopper. Thereafter, the root side of the binding band is tightened to bind by engaging the convex-like gears with the pawl portions of the other pawl member of the stopper.

The useless portion of the binding band is cut out by passing and moving the cutter through the space of the ribs on both the sides, provided at the opening end of the stopper.

When the useless portion of the binding band is cut out by passing the cutter through between the ribs of the stopper, a cutting surface of the binding portion is positioned at least lower than a protruding end surface of the ribs. Accordingly, even when the operators move their hands along the protruding end surface of the ribs of the stopper on a certain occasion, the cutting surface of the binding band does not strike on the surface of their hands, thereby their hands being prevented from being wounded. As a result, the apparatus according to the present invention is entirely safe and in addition it is beforehand avoidable to make the merchandise value lower by staining the merchandises due to the operators' bleeding.

These and other objects, features and advantages of the present invention will be more apparent from the following description of a preferred embodiment, taken in conjunction with the accompanying drawings.

### BRIEF DESCRIPTION OF THE DRAWINGS

Fig. 1 is an illustration showing a state of binding electric cables in a conventional binding apparatus;
Fig. 2 is a cross-sectional view of a main portion of an apparatus for binding electric cables, which is a preferred embodiment according to the present invention;
Fig. 3 is a perspective view of a binding band and a stopper of the binding apparatus, which is a preferred embodiment according to the present invention;
Fig 4 is a plan view of the stopper as shown in Fig. 3;
Fig. 5 is a cross-sectional view, taken in the line X-X of Fig. 4; and
Fig. 6(a) to 6(e) are illustrations of binding aspects based on the binding apparatus as shown in Fig. 2.

### DETAILED DESCRIPTION OF THE EMBODIMENTS

Hereinafter, preferred embodiments according to the present invention will be described with reference to the accompanying drawings.

In the figures, a reference alphabet A shows a binding apparatus. The binding apparatus A comprises a combination of a binding band 1 made of synthetic resins and a stopper 2 for use in binding electric cables or the like.

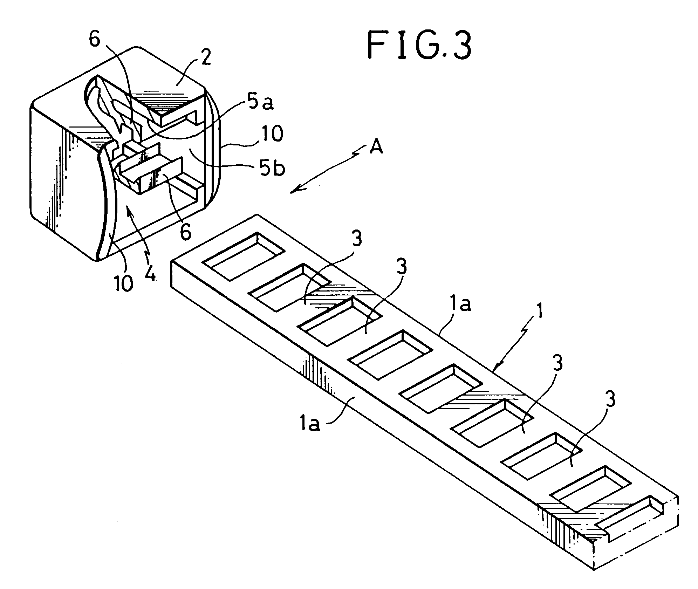

The binding band 1 is used for binding by winding it round an object to be bound like electric cables etc. in a loop fashion, and as shown in Fig. 3, it comprises a prolonged member formed with a plurality of convex-like gears 3, 3 --- in a rack fashion on a surface thereof.

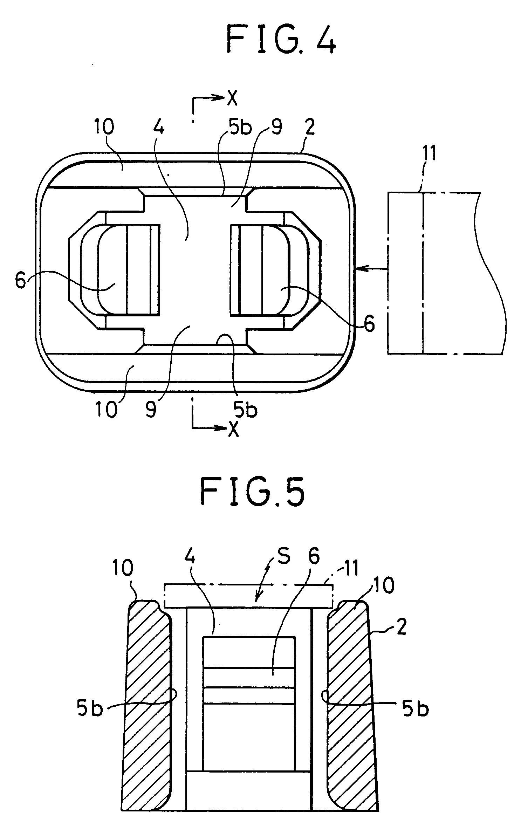

The stopper 2 has, as shown in Figs. 4 and 5, an opening portion 4 with a size enough to insert the binding band 1 into the opening portion 4 in a state with respective back surfaces of the binding band 1 being overlapped, and further a pair of pawl members 6, 6 in the stopper 2 are projected in a trapezoid shape, engaged with the plurality of convex-like gears 3, 3 --- of the binding band 1 which is respectively inserted into said opening portion 4 from one opposing walls 5a, 5a inside the opening portion 4.

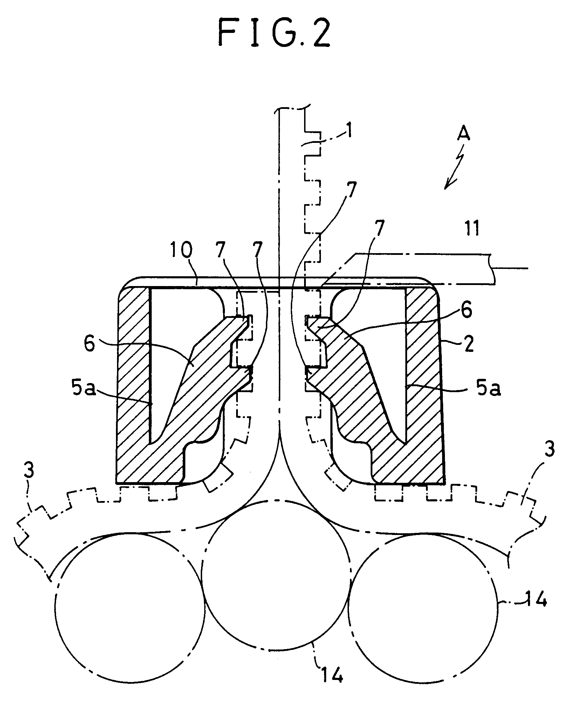

As shown in Fig. 2, the pawl members 6, 6 are supported in the flexible manner by the opposing walls 5a, 5a of the stopper 2. On the inner surface of each the pawl members 6, 2 pieces of pawl portions 7, 7 are formed as opposed to each other so as to respectively engage with the convex-like gears 3, 3 of said binding band 1. Also, an aperture between the top ends of the pawl members 6, 6 is formed wider than a thickness of the binding band 1. Moreover, the opposing inner faces on the base side of the pawl member 6 are formed so as not to disturb the interposition of the binding band 1 inserted into the inside of the opening portion 4 so that the binding band 1 may readily be inserted.

Moreover, as shown in Fig. 4, the one opposing walls 5a, 5a of said opening portion 4 are adjacent to and faces to the other opposing walls 5b, 5b, which are formed with guide chamfers 9, 9 for guiding both side edges 1a, 1a of the binding band 1 inserted respectively into the inside of said opening portion 4 to insert the binding band 1 so as to put the overlapped face of the binding band 1 on a central axis of said opening portion 4.

Moreover, as shown in Fig. 5, in the opening portion 4 of said stopper 2, parallel ribs 10, 10 are protrusively formed on both sides of an opening end facing to the top end side of said pawl members 6, 6, namely on an upper end portion of the opposing walls 5b, 5b. Also, a space S is formed between the ribs 10, 10 of both the sides so that a cutter 11 for cutting the useless portion of said binding band 1 may sufficiently pass. Said space S is formed so that the top end of the pawl members 6, 6 may not come into the space S.

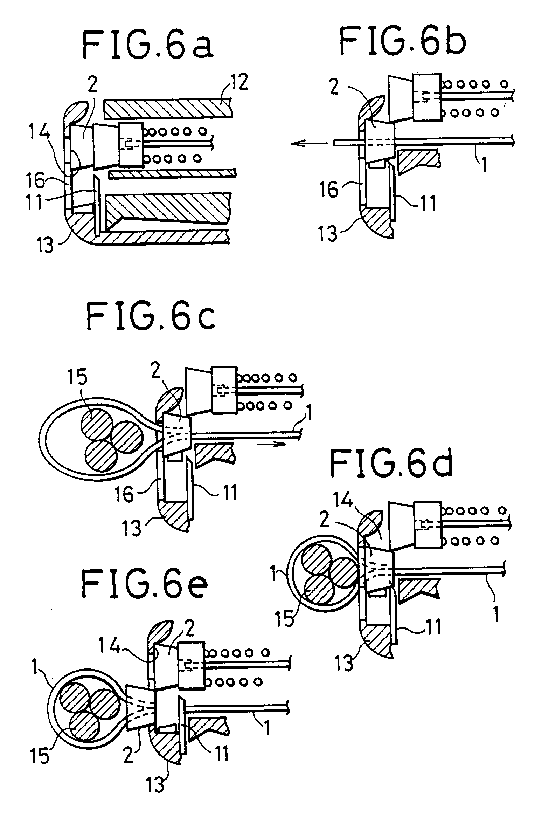

Hereinafter, an aspect of using the binding apparatus A with the above-mentioned arrangement will be described. As shown in Fig. 6(a), a head portion 13 is provided in the backward and forward moving manner at the front end of a tool body 12 of the binding tool. The tool body 12 is loaded in a line with the stoppers 2 to which a force is applied in the forward direction. by moving the head portion 13 in the one direction, the forefront stopper 2 is jumped into a receiving portion 14 of the head portion 13. Subsequently, the top end of the binding band 1 set in the tool body 12 is penetrated into the opening portion 4 of the stopper 2 inside the head portion 13 to draw out (Fig. 6(b)). Secondly, the binding band 1 is wound round an object 15 to be bound like electric cables etc. in a loop fashion, and the said one end of the binding band 1 is again inserted into the opening portion 4 of the stopper in the reverse direction to engage the convex-like gears 3 with the pawl portions 7, 7 of the one pawl member 6 of the stopper 2 (Fig. 6(c)). Thereafter, by tightening the root side of the binding band 1 and engaging the convex-like gears 3 with the pawl portions 7, 7 of the other pawl member 6 of the stopper 2, the object is finally bound (Fig. 6(d)).

The useless portion of the binding band 1, namely a portion protruding from the stopper 2, is cut out by the cutter 11 provided in the head portion 13 by moving the head portion 13 again, and thereafter the stopper 2 drifts away from a hole 16 of the head portion 13 (Fig. 6(e)). At the same time, the succeeding stopper 2 is jumped into the receiving portion 14 of the head portion 13 to prepare for the following binding.

By the way, as shown in Figs. 2, 4 and 5, since said cutter 11 passes through the space S existent between the ribs 10, 10 of the stopper 2, the cutter 11 does not cut anything other than the binding band 1 when passing through the space S.

As described above, the cuter 11 passes through between the ribs 10, 10 of the stopper and therefore when the useless portion of the binding band 1 is cut out, the cutting surface of the binding portion is positioned at least lower than the protruding end surface of the ribs 10, 10. Accordingly, even when the operators move their hands along the protruding end surface of the ribs 10, 10 of the stopper 2 later on, the cutting surface of the binding band 1 does not strike on the surface of the operators' hands, thereby their hands being prevented from being wound. As a result, the binding apparatus according to the present invention is entirely safe and in addition it is beforehand avoidable to make the merchandise value lower by staining the merchandises due to the operators' bleeding.

Incidentally, the ribs of the stopper may be formed on both the sides of the opening end on the side of the opposing walls 5a, 5a formed with the pawl members, so that the cutter may pass through between the ribs with the above arrangement.

Various modifications will become possible for those skilled in the art after receiving the teachings of the present disclosure without departing from the scope of the appended claims.

## Claims

1. A binding apparatus (A) for binding an object to be bound like electric cables, comprising:
a) a binding band (1) for binding by winding the band round the object to be bound in a loop fashion, formed with a plurality of gear-teeth (3) in a rack fashion on a front-surface of the binding band; and
b) a stopper (2) having an opening portion (4) through which the binding band (1) is inserted in a state with respective back surfaces thereof being adjacent, and a pair of pawl members (6) projecting towards each other from opposing walls (5a) inside the opening portion (4), said pawl members (6) being engaged with said gear-teeth (3) of the binding band (1) inserted through said opening portion (4); characterized by
c) a pair of parallel ribs (10) protruding from opposite sides of an opening end of the opening portion (4) of said stopper (2) which is at the free end of the pawl members (6) and a space being formed so that a cutter (11) for cutting a protruding portion of said binding band (1) passes through between said ribs (10) arranged on both sides of the opening end.

2. The binding apparatus as claimed in claim 1, wherein when the protruding portion of the binding band (1) is cut off by passing the cutter (11) through between the ribs (10) of the stopper (2) a cutting surface of the binding band (1) is positioned at least lower than a protruding end surface of the ribs (10).

3. A method for binding an object to be bound like electric cables by a binding apparatus (A) comprising a binding band (1) for binding by winding the band round the object to be bound in a loop fashion, formed with a plurality of gear-teeth (3) in a rack fashion on a front surface of the binding band (1); a stopper (2) having an opening portion (4) through which the binding band (1) is inserted in a state with respective back surfaces thereof being adjacent, and a pair of pawl members (6) projecting towards each other from opposing walls (5a) inside the opening portion (4) said pawl members (6) being engaged with said gear-teeth (3) of the binding band inserted through said opening portion (4); a pair of parallel ribs (10) protruding from opposite sides of an opening end of the opening portion (4) of said stopper (2) which is at the free end of the pawl members (6), and a space being formed so that a cutter (11) for cutting a protruding portion of said binding band passes through between the ribs (10) arranged on both sides of the opening end, comprising the steps of:
a) inserting one end of said binding band (1) into the opening portion (4) of the stopper (2) and drawing out to wind the binding band round the object (15) to be bound like electric cables etc. in a loop fashion;
b) again inserting the above-mentioned one end into the opening portion (4) of the stopper (2) in the reverse direction to pass the binding band (1) through the opening portion (4) in a state with the respective back surfaces being adjacent, so that the gear-teeth (3) are engaged with pawl portions (7) of said pawl members (6) of the stopper (2); and
c) tightening the root side of the binding band (1) to bind the object (15);
d) cutting off the protruding portion of the binding band (1) by passing the cutter (11) through the space between said ribs (10), provided at said opening end of the stopper (2).

## Patentansprüche

1. Bindevorrichtung (A) zum Binden eines zusammenzubindenden Objektes, z.B. elektrische Kabel, mit:
a) einem Band (1) zum Zusammenbinden durch Herumlegen des Bandes in einer Schleife um das zu bindende Objekt, wobei das Band auf einer Vorderfläche mit einer Vielzahl von Eingriffszähnen (3) nach Zahnstangenart ausgestattet ist; und
b) einem Stopper (2), der einen Öffnungsabschnitt (4), durch den das Band (1) mit jeweiligen Rückenflächen aneinanderliegend eingesetzt ist, und ein Paar Klauenelemente (6) aufweist, die in dem Öffnungsabschnitt von einander gegenüberliegenden Wänden aufeinander zuragen, wobei die Klauenelemente mit den Eingriffszähnen (3) des durch den Öffnungsabschnitt (4) eingesetzten Band (1) in Eingriff stehen, **gekennzeichnet** durch
c) ein Paar paralleler Rippen (10), die von einander gegenüberliegenden Seiten eines Öffnungsendes des Öffnungsabschnitts (4) des Stoppers (2) welches am freien Ende der Klauenelemente gelegen ist, vorstehen, wobei ein Raum gebildet wird, so daß ein Schneider zum Schneiden eines herausragenden Abschnitts des Bandes (1) zwischen den beidseitig des Öffnungsendes angeordneten Rippen hindurchfährt.

2. Bindevorrichtung nach Anspruch 1, wobei, wenn der herausragende Abschnitt des Bandes (1) durch das Hindurchfahren des Schneiders (11) zwischen den Rippen (10) des Stoppers (2) abgeschnitten ist, eine Schnittfläche des Bandes (1) zumindest niedriger als eine vorstehende Endfläche der Rippen (10) liegt.

3. Verfahren zum Binden eines zusammenzubindenden Objekts, z.B. elektrische Kabel, mittels einer Bindevorrichtung (A) mit einem Band (1) zum Zusammenbinden durch Herumlegen des Bandes in einer Schleife um das zu bindende Objekt, wobei das Band auf einer Vorderfläche mit einer Vielzahl von Eingriffszähnen (3) nach Zahnstangenart ausgestattet ist, einem Stopper (2), der einen Öffnungsabschnitt (4), durch den das Band (1) mit jeweiligen Rückenflächen aneinanderliegend eingesetzt ist, und ein Paar Klauenelemente (6) aufweist, die in dem Öffnungsabschnitt voneinander gegenüberliegenden Wänden einander zuragen, wobei die Klauenelemente mit den Eingriffszähnen (3) des durch den Öffnungsabschnitt (4) eingesetzten Band (1) in Eingriff stehen, ein Paar paralleler Rippen (10), die voneinander gegenliegenden Seiten eines Öffnungsendes des Öffnungsabschnitts (4) des Stoppers (2) vorstehen, welches am freien Ende der Klauenelemente gelegen ist, und mit einem Raum der so ausgebildet ist, daß ein Schneider (11) zum Schneiden eines herausragenden Abschnitts des Bandes (1) zwischen den beidseitig des Öffnungsendes angeordneten Rippen hindurchfährt, mit den Verfahrensschritten:
a) Einstecken eines Endes des Bandes (1) in den Öffnungsabschnitt (4) des Stoppers (2) und Herausziehen, um das Band in einer Schleife um das zusammenzubindende Objekt, z.B. elektrische Kabel, herumzulegen,
b) erneutes Einstecken des oben erwähnten Bandes aus entgegengesetzter Richtung in den Öffnungsabschnitt (4) des Stoppers (2), um das Band (1), mit den jeweiligen Rückenflächen einander zugewandt, durch den Öffnungsabschnitt hindurchzuführen, so daß die Eingriffszähne (3) mit den Klauenabschnitten (7) der Klauenelemente (6) des Stoppers (2) in Eingriff sind und
c) Anziehen der Ausgangsseite des Bandes, um das Objekt zusammenzubinden,
d) Abschneiden des herausragenden Abschnitts des Bands durch Hindurchführen eines Schneiders (11) durch den Raum zwischen den Rippen (10), die am Öffnungsende des Stoppers (2) angeordnet sind.

## Revendications

1. Dispositif de ligature (A) pour ligaturer des objets devant être ligaturés, comme par exemple des câbles électriques, et comprenant :
a) une bande de ligature (1) assurant un cerclage par enroulement de ladite bande en boucle autour de l'objet devant être ligaturé, dotée d'une pluralité de dents d'engrènement (3) agencées en crémaillère sur une face frontale de la bande de ligature ; et
b) un arrêt (2) présentant une portion ouverte (4) par laquelle la bande de ligature (1) est insérée en maintenant ses faces dorsales respectives adjacentes, et deux doigts d'encliquetage (6) faisant saillie en convergeant l'un vers l'autre à partir de parois opposées (5) à l'intérieur de l'ouverture (4), lesdits doigts d'encliquetage (6) étant en prise avec les dents d'engrènement précitées (3) de la bande de ligature (1) insérée par ladite portion ouverte (4), caractérisé par :
c) deux nervures ou rebords parallèles (10) faisant saillie sur des côtés opposées d'une extrémité ouverte de la portion ouverte (4) dudit arrêt (2) qui se trouve à l'extrémité libre des doigts d'encliquetage (6), et un espace étant ainsi ménagé, de sorte qu'une lame coupante (11) destinée à sectionner une portion saillante de ladite bande de ligature (1) puisse passer entre lesdites nervures (10) disposées de part et d'autre de ladite extrémité ouverte.

2. Dispositif de ligature selon la revendication 1, dans lequel une surface coupée de la bande de ligature (1) se trouve positionnée au moins plus bas qu'une face d'extrémité saillante des nervures (10) lorsque la portion saillante de la bande de ligature (1) est sectionnée par passage de la lame (11) entre tes nervures (10) de l'arrêt (2).

3. Procédé pour ligaturer des objets devant être ligaturés, comme par exemple des câbles électriques, par un dispositif de ligature (A) comprenant une bande de ligature (1) asssurant un cerclage par enroulement de la bande en boucle autour de l'objet devant être ligaturé, dotée d'une pluralité de dents d'engrènement (3) agencées en crémaillère sur une face frontale de la bande de ligature ; un arrêt (2) présentant une portion ouverte (4) par laquelle la bande de ligature (1) est insérée en maintenant ses faces dorsales respectives adjacentes, et deux doigts d'encliquetage (6) faisant saillie en convergeant l'un vers l'autre à partir de parois opposées (5) à l'intérieur de l'ouverture (4), lesdits doigts d'encliquetage (6) étant en prise avec les dents d'engrènement précitées (3) de la bande de ligature (1) insérée par la portion ouverte susdite (4) ; deux nervures ou rebords parallèles (10) faisant saillie sur des côtés opposés d'une extrémité ouverte de la portion ouverte (4) dudit arrêt (2) qui se trouve à l'extrémité libre des doigts d'encliquetage (6), et un espace étant ainsi ménagé de sorte qu'une lame coupante (11) destinée à sectionner une portion saillante de ladite bande de ligature (1) puisse passer entre lesdites nervures (10) disposées de part et d'autre de l'extrémité ouverte, procédé consistant :
a) à insérer une extrémité de ladite bande de ligature (1) dans la portion ouverte (4) de l'arrêt (2), et à tirer vers l'extérieur en vue d'enrouler la bande de ligature en boucle autour de l'objet (15) devant être ligaturé, tel qu'un ensemble de câbles électriques, etc. ;
b) à réinsérer l'extrémité précitée dans la portion ouverte (4) de l'arrêt (2), en sens inverse, pour faire passer la bande de ligature (1) au-travers de la portion ouverte (4) en maintenant les faces dorsales respectives adjacentes, de telle sorte que les dents d'engrènement (3) soient en prise avec les ergots d'encliquetage (7) desdits doigts d'encliquetage (6) de l'arrêt (2) ; et
c) à serrer la portion de cerclage de la bande de ligature (1), pour ligaturer l'objet (15) ;
d) à sectionner la partie saillante de la bande de ligature (1) en faisant passer la lame (11) au-travers de l'espace ménagé entre les nervures ou rebords (10) prévues sur ladite extrémité ouverte de l'arrêt (2).
